# FASCICULE DE BREVET EUROPEEN

(11) **EP 3 108 730 B1**
(45) Date de publication et mention de la délivrance du brevet: **23.02.2022**
(21) Numéro de dépôt: 16305717.7
(22) Date de dépôt: 14.06.2016
(51) Int. Cl.: A01B 59/06, A01B 63/02

(54) **MACHINE AGRICOLE PORTÉE AVEC UN GROUPE D'OUTILS POUVANT ÊTRE DÉPORTÉ LATÉRALEMENT**
LANDWIRTSCHAFTLICHE MASCHINE MIT EINER SEITLICH VERSETZBAREN WERKZEUGGRUPPE
MOUNTED AGRICULTURAL MACHINE WITH A GROUP OF TOOLS THAT CAN BE OFFSET LATERALLY

(30) Priorité: 15.06.2015 FR 1555431
(43) Date de publication de la demande: 28.12.2016
(73) Titulaire: Kuhn SAS, 67700 Saverne (FR)
(72) Inventeur: MORGENTHALER, Olivier, 67270 HOCHFELDEN (FR); WOLFF, Michel, 67670 WALTENHEIM SUR ZORN (FR)
(74) Mandataire: Cabinet Nuss

(56) Documents cités:
- EP-A1- 0 839 443
- EP-A1- 0 880 879
- EP-A1- 1 800 528
- EP-A1- 1 800 529
- EP-A1- 1 925 198
- EP-A1- 2 174 538
- FR-A- 1 453 923

## Description

La présente invention concerne le domaine des machines agricoles destinées à être portées par des tracteurs et comprenant un outil ou un ensemble d'outils pouvant être déplacés entre une position repliée de transport dans laquelle il est situé au-dessus ou à l'arrière de la structure porteuse de la machine et une position dépliée avec basculement et pivotement latéral, et support en porte-à-faux dudit outil ou ensemble d'outils, de manière désaxée par rapport au tracteur.

La présente invention a pour objet une machine agricole du type précité présentant un positionnement amélioré de l'outil ou du groupe d'outils en cas de déport latéral.

De manière générale, les machines agricoles visées dans la présente comprennent, d'une part, une structure porteuse avec un châssis et une potence, le châssis comportant un cadre d'attelage pour un montage accouplé sur un système d'attelage à trois points d'un tracteur ou analogue, et, d'autre part, un outil ou groupe d'outils monté sur le châssis par l'intermédiaire de la potence qui est reliée de manière articulée au châssis par une extrémité et qui porte l'outil ou le groupe d'outils à son extrémité opposée libre.

Ladite potence peut, par un pivotement par rapport au châssis, amener l'outil ou le groupe d'outils dans une position déportée latéralement par rapport à la direction d'avance et l'inclinaison de ladite potence par rapport à un plan horizontal ou au plan du sol peut être commandée, dans la position déportée latéralement, pour déplacer l'outil ou le groupe d'outils entre une position abaissée et une position relevée.

De plus, le cadre d'attelage du châssis comporte notamment deux tourillons inférieurs destinés à venir en prise avec les deux bras de relevage inférieurs du système d'attelage du tracteur ou analogue, les deux tourillons étant mutuellement alignés et leur axe commun étant situé dans un plan horizontal ou disposé parallèlement au plan du sol, en position de dépose de la machine.

L'invention concerne plus particulièrement, mais non limitativement, des machines du type faucheuse et faucheuse conditionneuse, par exemple du type connu sous les désignations GMD 4010, GMD 4410 et FC 313 par la demanderesse.

Dans ces machines, dites pendulaires, le groupe de fauche est monté de manière articulée, en son centre, sur l'extrémité de la potence, permettant ainsi un meilleur suivi au sol et un allègement uniforme sur la largeur de coupe.

De plus, dans ce type de machines, la potence est montée doublement articulée sur un châssis comprenant un cadre d'attelage en U par l'intermédiaire d'un fût de commande, permettant d'assurer un déplacement de la potence de l'arrière vers le côté et vice versa (par exemple sous l'action d'un vérin double action correspondant) et un déplacement de la potence entre une position abaissée et une position relevée (par exemple sous l'action d'un vérin simple action correspondant).

Ces machines comprennent en général également, d'une part, un vérin de passage d'andains (relèvement temporaire de la faucheuse) et, d'autre part, un organe d'équilibrage (plaquant le groupe de fauche contre la potence lors du relevage), par exemple un vérin, un ressort ou analogue.

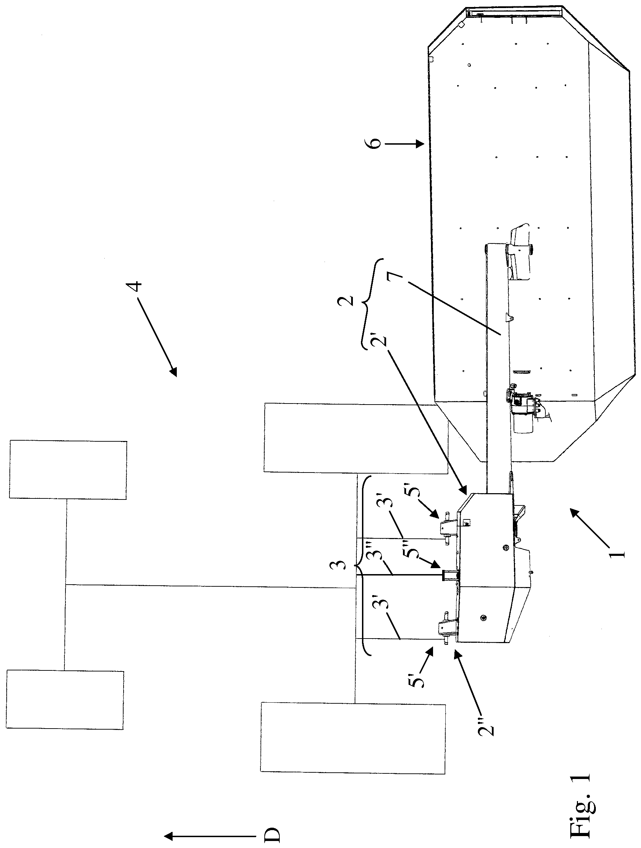

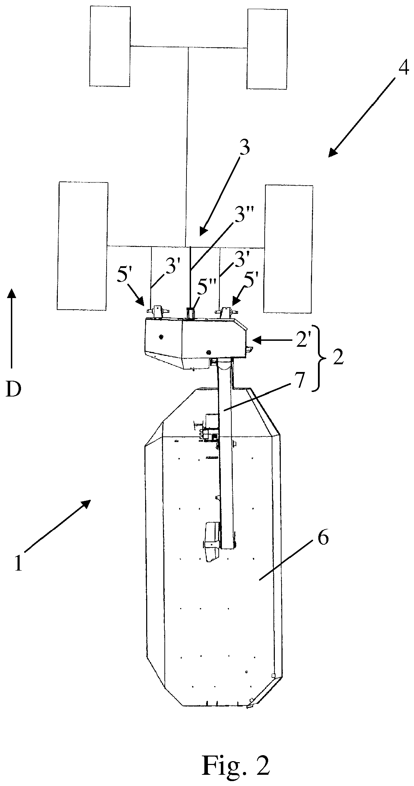

Ainsi, vues de dessus, ces machines peuvent essentiellement adopter une position de travail (figure 1), avec dépôt latéral et une position de transport (figure 2) avec pivotement vers l'arrière.

Un phénomène couramment observé par les utilisateurs de ces machines est le manque de dégagement en passage d'andains. A ce moment-là, la majorité du poids se trouve sur le côté droit du châssis suivant le sens de la marche et donc sur le bras de relevage droit du tracteur. Cela a pour conséquence, du fait du poids, que le pneu arrière droit du tracteur s'écrase, tandis que le côté gauche se voit délesté (et donc relevé par rapport à une charge symétrique). Si le tracteur a déjà quelques heures d'utilisation derrière lui, il y a également du jeu dans les chandelles de son système d'attelage. L'addition de tous ces phénomènes aboutit à ce que le dégagement du groupe de fauche en hauteur (garde au sol) n'est plus suffisant pour le passage correct des andains.

Jusqu'à présent ce problème est couramment résolu par le conducteur en réglant la chandelle droite à une longueur plus courte que la chandelle gauche, ce qui permet de compenser cet affaissement lors du déport latéral avec maintien de la garde au sol. Ce n'est cependant pas une solution satisfaisante pour les utilisateurs qui n'apprécient pas d'avoir à régler les deux chandelles de manière différente. De plus, dans les cas où le tracteur manque d'entretien, les chandelles peuvent être grippées, ce qui peut rendre leur réglage impossible.

En outre, le phénomène précité d'affaissement est encore plus important avec les machines récentes qui sont plus larges (porte-à-faux plus important) et plus lourdes.

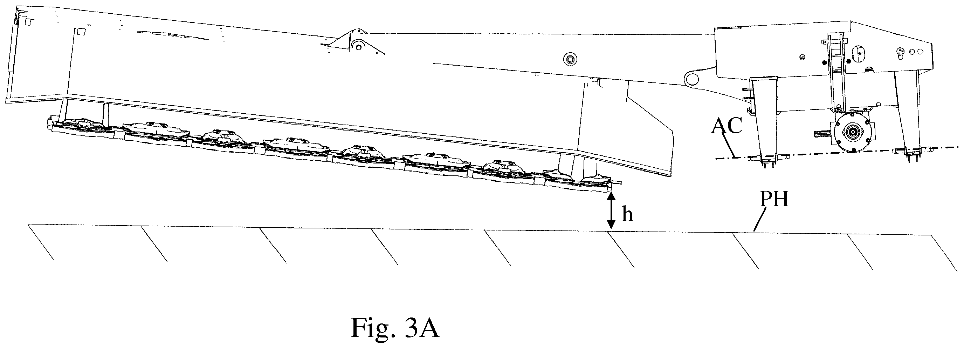

La figure 3A est une vue en élévation frontale d'une machine d'un type évoqué précédemment en position de passage d'andains illustrant (en l'absence de réglage compensatoire des chandelles) la situation résultant de l'écrasement du pneu arrière du tracteur, lié au déport latéral en porte-à-faux de la faucheuse : on observe une inclinaison de l'axe commun AC des tourillons inférieurs et un maintien du groupe de fauche à une hauteur h (garde au sol) inférieure à la hauteur nominale souhaitée, voire à la hauteur minimale nécessaire au passage d'andains.

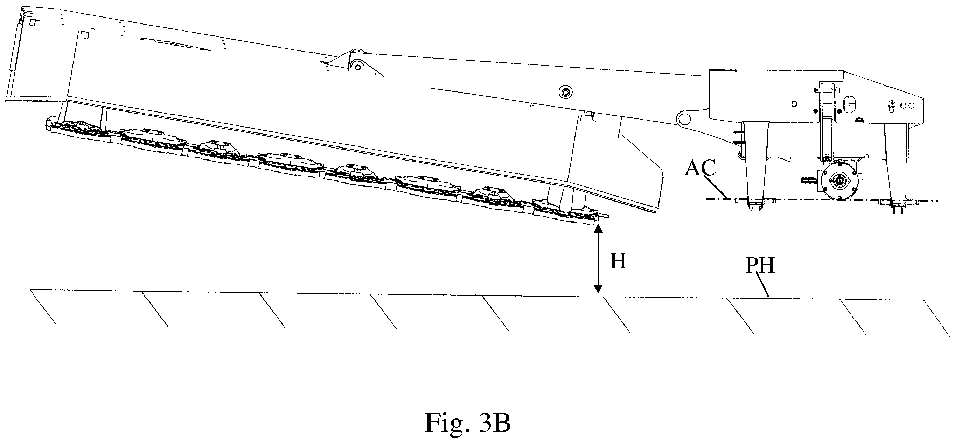

La figure 3B illustre, avec une vue similaire à celle de la figure 3A, la situation après préréglage des chandelles pour compenser l'affaissement du côté déport (voir la position de l'axe commun AC parallèle au sol), permettant d'aboutir à un maintien du groupe de fauche à une hauteur H (garde au sol) suffisante, préférentiellement égale à la hauteur nominale d'environ 400 mm, en position de passage d'andains.

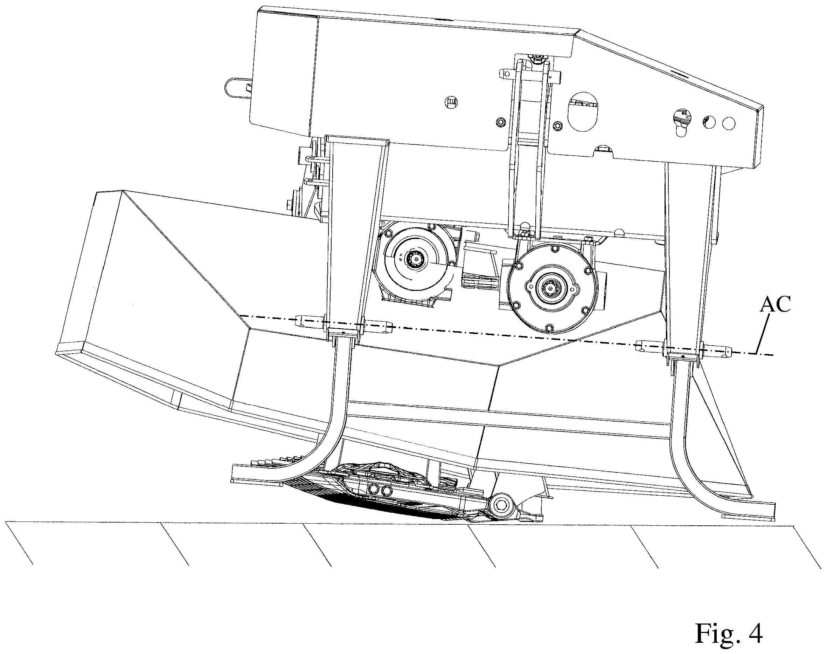

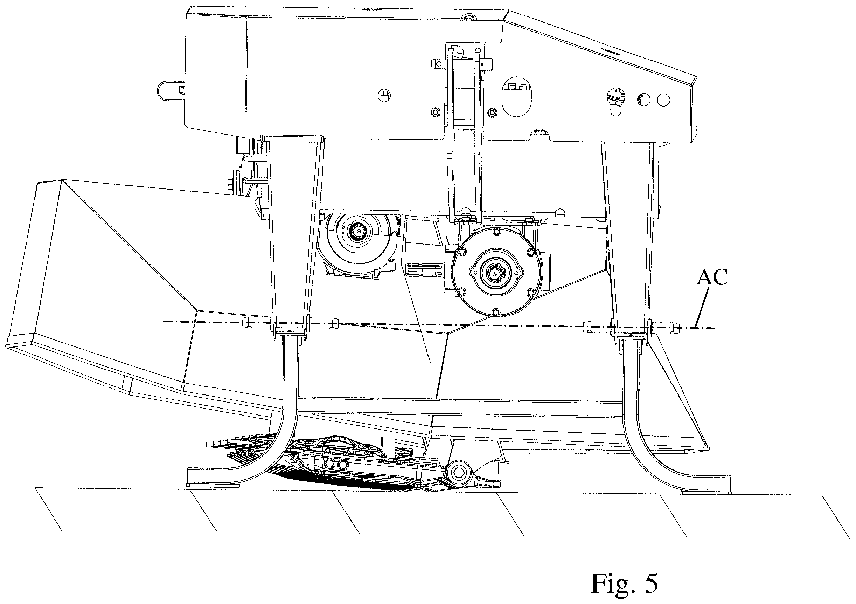

Un effet annexe résultant du réglage compensatoire des chandelles réside dans le fait que, lors de la dépose au sol de la machine, en vue de son décrochage, les deux béquilles d'appui ne prennent pas contact simultanément avec le sol, ce qui rend le détachement de la machine plus long et plus risqué, avec un possible basculement ou un déplacement latéral imprévisible de la machine (répartition du poids de la machine sur ses différents appuis) à l'instant de la désolidarisation (voir figure 4 - à comparer avec la figure 5 qui illustre le dépose au sol sans réglage compensatoire des chandelles).

Enfin, après avoir décroché la machine, l'utilisateur est obligé de refaire une manipulation au niveau des chandelles pour annuler le réglage compensatoire.

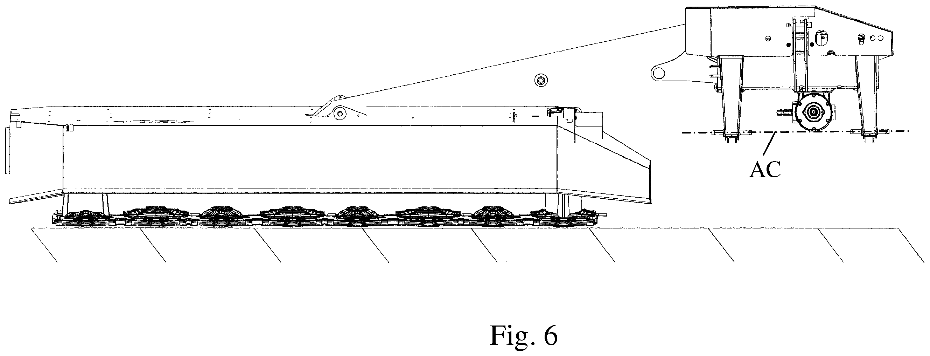

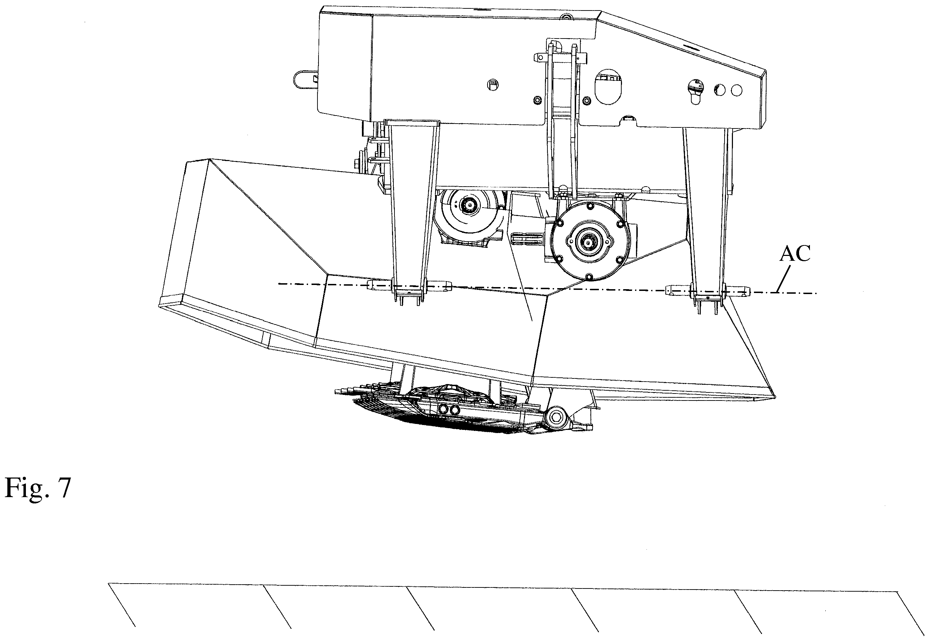

Les figures 6 et 7 illustrent respectivement, avec des vues similaires à celles des figures 4 et 5, la machine en position de travail (avec préréglage compensatoire - figure 6) et la machine en position de transport (sans préréglage compensatoire).

Plusieurs solutions ont déjà été proposées dans l'état de la technique pour essayer de s'affranchir de cette opération de réglage fastidieuse, mais elles présentent toutes des inconvénients majeurs ou des limitations pratiques rédhibitoires.

Ainsi, parmi les solutions proposées, on peut évoquer la prévision d'un bras d'attelage à commande hydraulique, permettant un réglage de la longueur d'un bras d'attelage ou de la position en hauteur du tourillon correspondant (voir par exemple EP 0 880 879 et DE 10 2010 022 246). Néanmoins, cette solution est coûteuse, alourdit la machine et rend le schéma fluidique plus complexe. En outre, il a également été proposé un cadre d'attelage inclinée au dételage. Toutefois, cette mesure constructive ne réalise aucune compensation du phénomène d'inclinaison lié à l'affaissement du pneu concerné du tracteur : elle fournit uniquement une indication de l'ampleur du réglage des chandelles à effectuer.

De plus, des solutions autorisant une modification du cadre d'attelage ou de la liaison entre ce dernier et le châssis de la machine sont également disponibles dans le commerce. Elles présentent néanmoins, en plus d'une construction plus complexe, des risques d'utilisation non négligeables, l'opérateur étant autorisé à modifier la structure même de la machine.

Enfin, des machines dont les longueurs des deux bras du cadre d'attelage sont différentes sont aussi connues, mais leur construction n'est pas compatible avec l'utilisation d'une interface entre le système d'attelage du tracteur et le cadre d'attelage de la machine agricole (par exemple du type connu sous la désignation "Quick Hitch" - marque déposée), et, plus généralement, elles ne permettent pas de réaliser un attelage simple et aisé. En effet, du fait du décalage vertical entre les deux tourillons inférieurs, présentant des axes parallèles mais non confondus, ces derniers doivent être attelés successivement. Or, le mouvement de relevage des bras inférieurs du système d'attelage du tracteur, après attelage du tourillon situé le plus bas et avant attelage du tourillon situé le plus haut, vu que le centre de gravité de la machine se situe entre les deux tourillons de la machine, va générer un pivotement de la machine autour de ce premier point d'attelage, entraînant un abaissement du tourillon non encore attelé et surtout un déplacement horizontal de ce dernier empêchant son logement automatique dans le site correspondant du bras inférieur libre. L'utilisateur doit par conséquent descendre du tracteur et ajuster de force l'écartement du bras d'attelage à la nouvelle largeur. Bien entendu, un gonflage dissymétrique des pneumatiques des roues arrière du tracteur n'est pas non plus une solution viable dans la pratique. Le document EP1800529A1 décrit aussi une solution connue, en particulier une alternative au second mode de réalisation de l'invention.

La présente invention a pour but de surmonter au moins les principaux inconvénients ou les limitations essentielles évoqués précédemment en relation avec les solutions proposées dans l'art antérieur.

A cet effet, elle a pour objet une machine agricole de la revendication 1 et présentant également les caractéristiques de la partie caractérisante de cette revendication.

Par disposition constructive intégrée dans sa structure, on entend, dans la présente description, que ladite disposition est intégrée dans la structure de la machine lors de sa fabrication et ne met en œuvre aucun mécanisme de réglage, comme par exemple un vérin ou un mécanisme à vis du type bras de poussée d'un tracteur.

Par augmenter la distance entre, d'une part, l'axe commun aux deux tourillons d'attelage inférieurs ou le plan contenant simultanément cet axe et la direction d'avance et, d'autre part, le point ou l'axe de liaison entre l'extrémité de la potence et l'outil ou le groupe d'outils, on entend dans la présente attribuer constructivement à cette distance une valeur suffisante de sorte que l'outil ou le groupe d'outils dispose d'une garde au sol suffisante pour un passage d'andains correct, c'est-à-dire sans toucher lesdits andains.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

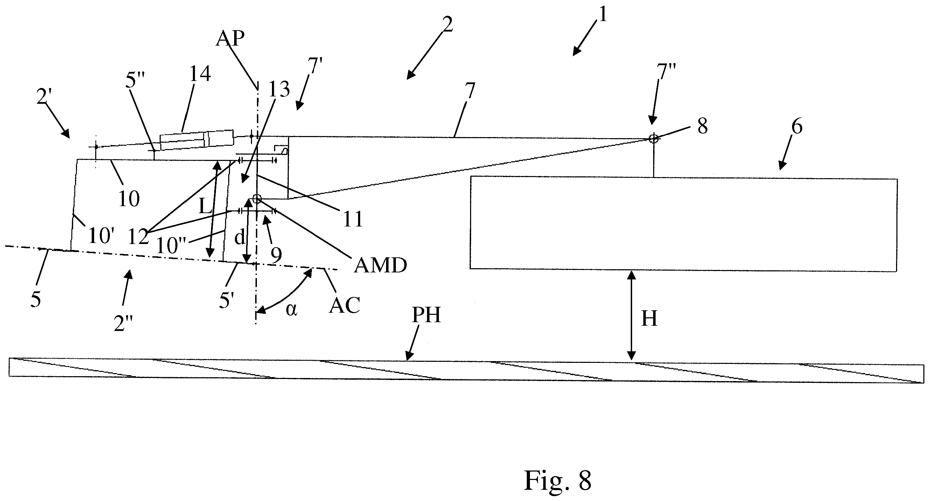

les figures 8 à 10 sont des représentations schématiques simplifiées (sous forme de représentations squelettiques vues dans le sens de la direction d'avance) de différents modes de réalisation de l'invention, illustrant la machine agricole du type faucheuse, accrochée à un tracteur, en position de passage d'andains (le tracteur étant considéré transparent) ;

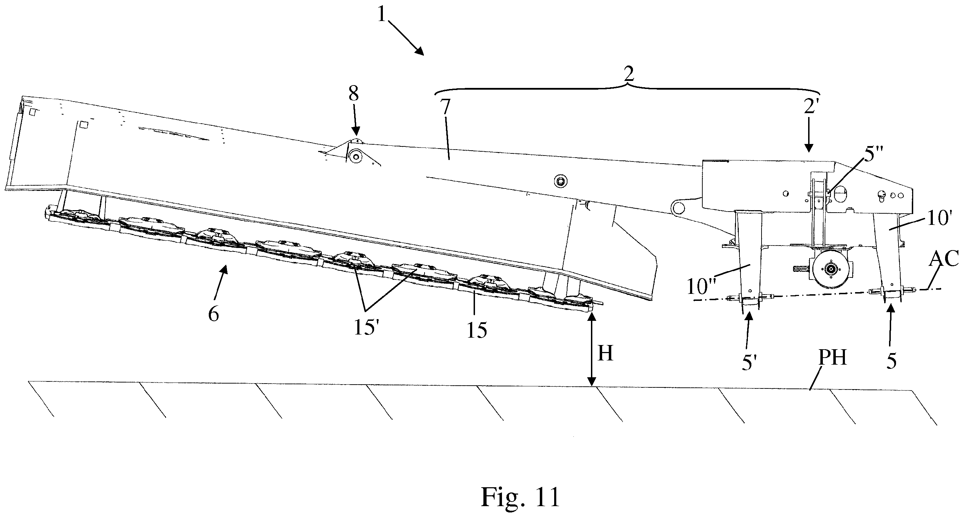

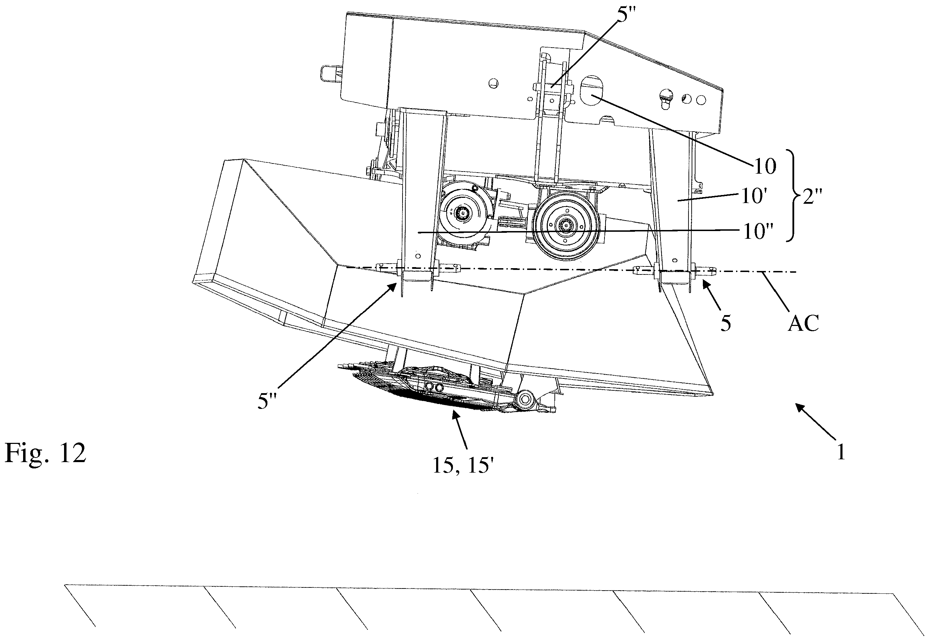

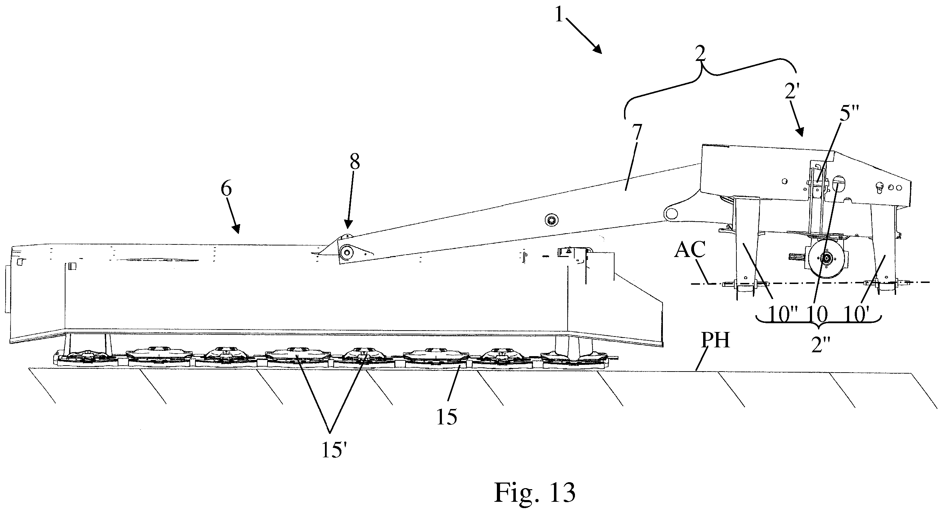

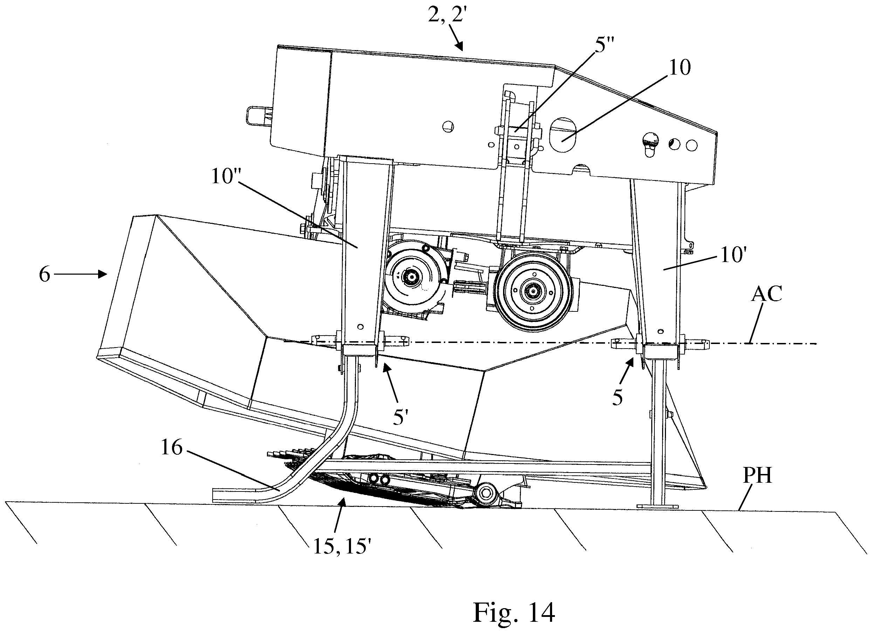

les figures 11 à 14 sont des vues similaires à celles des figures 3 à 7 montrant une machine agricole du type faucheuse équipée de la disposition constructive selon le mode de réalisation de l'invention représenté figure 8 (avec les chandelles du tracteur présentant un réglage identique), respectivement en position de passage d'andains (figure 11), en position de transport (figure 12), en position de travail en appui au sol (figure 13) et en position de dépose (figure 14), et,

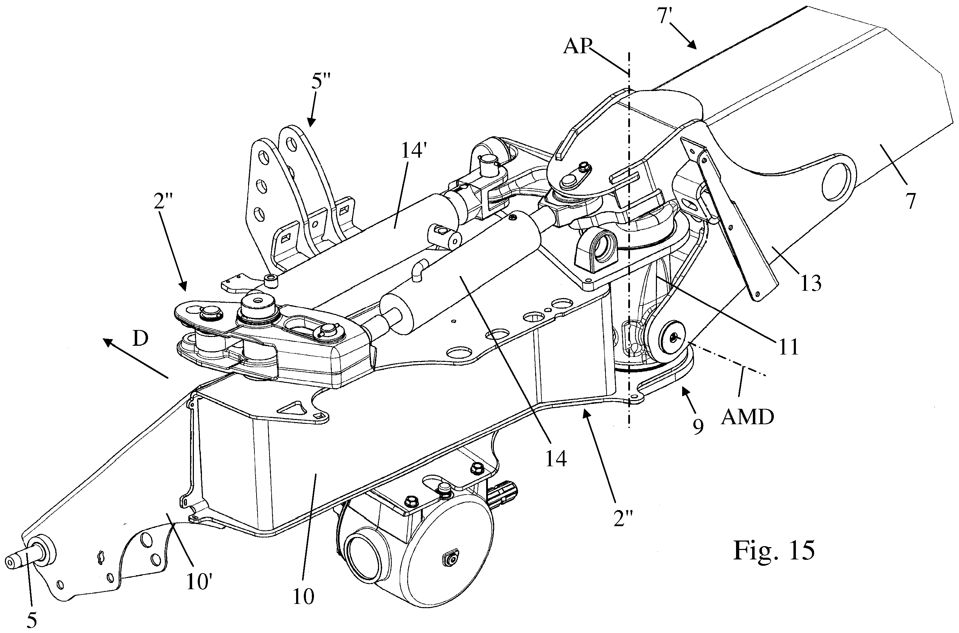

la figure 15 est une vue partielle en perspective illustrant une partie de la structure support (châssis + potence) et des actionneurs d'une machine telle que représentée sur les figures 11 à 14, l'habillage étant enlevé.

Les figures 8 à 14 illustrent, de manière schématique ou non, une machine agricole 1 portée comprenant, d'une part, une structure porteuse 2 avec un châssis 2' et une potence 7, le châssis 2' comportant un cadre d'attelage 2" pour un montage accouplé sur un système d'attelage 3 à trois points d'un tracteur 4 ou analogue, et, d'autre part, un outil ou groupe d'outils 6 monté sur le châssis 2' par l'intermédiaire de la potence 7 qui est reliée de manière articulée au châssis 2' par une extrémité 7' et qui porte l'outil ou le groupe d'outils 6 à son extrémité opposée 7" libre.

Cette potence 7 est apte et destinée, par un pivotement par rapport au châssis 2', à amener l'outil ou le groupe d'outils 6 dans une position déportée latéralement par rapport à la direction d'avance D et l'inclinaison de ladite potence 7 par rapport à un plan horizontal PH ou au plan du sol pouvant être commandée (préférentiellement en réalisant également un mouvement de pivotement), dans la position déportée latéralement, pour déplacer l'outil ou le groupe d'outils 6 entre une position abaissée (position de travail au sol) et une position relevée (position de passage d'andains).

Le cadre d'attelage 2" du châssis 2' comporte notamment deux tourillons inférieurs 5, 5' destinés à venir en prise avec les deux bras de relevage inférieurs 3' du système d'attelage 3 du tracteur ou analogue 4, les deux tourillons 5 et 5' étant mutuellement alignés et leur axe commun AC étant situé dans un plan horizontal ou disposé parallèlement au plan du sol, en position de dépose de la machine 1.

La structure porteuse 2 est également reliée au tracteur 4 par le biais d'un bras supérieur 3" (barre de poussée) de ce dernier, qui vient en prise sur un tourillon supérieur 5" (goujon, cheville ou analogue, monté dans un site de réception) solidaire du cadre d'attelage 2" et formant le troisième point d'attelage entre la machine 1 et le tracteur 4. On notera sur les figures que les tourillons 5 et 5' consistent avantageusement en des tourillons doubles, s'étendant des deux côtés opposés de chaque bras 10', 10" correspondant, pour permettre un attelage de la machine sur des tracteurs à système d'attelage à trois points de différentes largeurs.

Conformément à l'invention, ladite machine agricole 1 intègre dans sa structure, entre ses tourillons d'attelage inférieurs 5, 5' et l'extrémité libre 7" de la potence 7 portant l'outil ou le groupe d'outils 6, une disposition constructive visant à augmenter la distance entre, d'une part, l'axe commun AC aux deux tourillons d'attelage inférieurs 5, 5' ou le plan contenant simultanément cet axe AC et la direction d'avance D et, d'autre part, le point ou l'axe de liaison 8 entre l'extrémité 7" de la potence 7 et l'outil ou le groupe d'outils 6, en position déportée latéralement de ce dernier. L'effet de cette disposition constructive est une garde au sol H dudit outil ou groupe d'outils 6 suffisante pour un passage d'andains correct.

Ainsi, l'invention propose de rattraper l'affaissement du pneumatique de la roue du tracteur 4 située du côté du tourillon inférieur 5' supportant l'essentiel du poids de la machine 1 dans sa position suspendue (et relevée) à l'état basculé avec déport latéral (c'est-à-dire en position de passage d'andains), en prévoyant une dissymétrie constructive intégrée dans la structure même de ladite machine 1, lors de sa fabrication. Cette mesure de précompensation structurelle est ajustée pour aboutir, en position de déport latéral suspendu, à un positionnement du point ou de l'articulation de liaison 8 à une hauteur suffisante (malgré l'affaissement du pneumatique concerné et l'absence de réglage dissymétrique des chandelles) pour aboutir à une garde au sol de l'outil ou du groupe d'outils 6 suffisante (par exemple pour un passage d'andain), préférentiellement équivalente à la garde au sol obtenue théoriquement en cas d'absence d'affaissement dudit pneumatique.

Du fait de leur alignement et de la situation de leur axe commun AC en position déposée au sol de la machine (figure 14), l'attelage des deux tourillons 5 et 5' est réalisée simultanément lors de la montée des bras de relevage inférieurs 3', rendant la solution selon l'invention compatible avec un système d'attelage utilisant une interface du type évoqué précédemment.

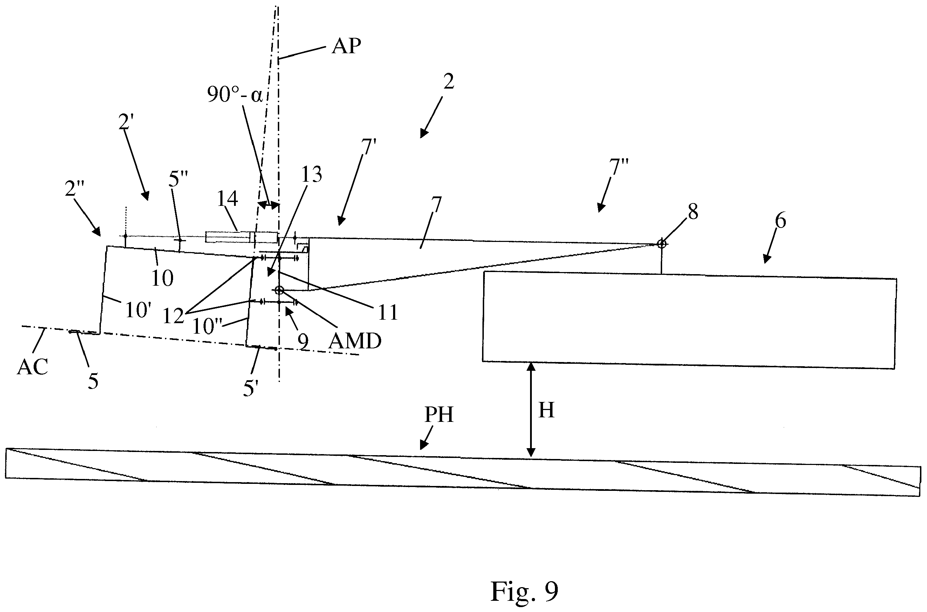

Selon l'invention, et comme cela ressort des figures 8 et 9, la disposition constructive consiste en une inclinaison de l'axe AP de la liaison articulée de pivotement 9 entre la potence 7 et le châssis 2' par rapport à la perpendiculaire au plan contenant, d'une part, l'axe commun AC aux deux tourillons d'attelage inférieurs 5, 5' et, d'autre part, un axe sécant (avec l'axe AC) et parallèle à la direction d'avance D du tracteur 4 (et donc de la machine 1), ce du côté qui est opposé au côté du possible déport latéral de l'outil ou du groupe d'outils 6.

Plus précisément, il peut être prévu que l'axe AC commun aux deux tourillons d'attelage inférieurs 5, 5' forme avec l'axe de pivotement AP de la liaison articulée 9 de la potence 7 avec le châssis 2', vus selon la direction d'avance D, un angle α inférieur à 90°. Préférentiellement, ledit angle α entre l'axe de pivotement AP et l'axe commun AC est compris entre 82° et 88°, préférentiellement de l'ordre de 86°.

Selon l'invention, et comme le montrent les figures 8 et 11 à 14, la disposition constructive consiste en une construction asymétrique du châssis 2', le tourillon d'attelage inférieur 5' situé du côté du possible déport latéral de l'outil ou du groupe d'outils 6 étant disposé plus bas que l'autre tourillon d'attelage inférieur 5, c'est-à-dire à une distance d verticale (ou selon la direction de l'axe pivotement AP) plus importante par rapport à la liaison articulée 9 de la potence 7 avec le châssis 2'. L'alignement axial mutuel des deux tourillons inférieurs 5 et 5' est toutefois garanti constructivement.

Plus précisément et en accord avec un premier mode de réalisation de l'invention, dans le cas d'un cadre d'attelage 2" en forme de U avec une poutre centrale transversale 10 portant un tourillon d'attelage supérieur 5" et deux bras latéraux 10', 10" portant à leurs extrémités libres respectives les tourillons d'attelage inférieurs 5 et 5', le bras latéral 10" situé du côté du possible déport latéral de l'outil ou du groupe d'outils 6 présente une longueur L plus grande que l'autre bras latéral 10', lesdits bras latéraux 10', 10" étant préférentiellement arrangés de manière non perpendiculaire, à savoir légèrement inclinés, par rapport à ladite poutre centrale transversale 10.

Préférentiellement, la différence de longueurs entre les deux bras latéraux 10', 10" est comprise entre 30 mm et 100 mm, préférentiellement de l'ordre de 70 mm, pour un espacement entre les deux tourillons inférieurs 5 et 5' compris entre 750 mm et 950 mm environ, préférentiellement de l'ordre d'environ 825 mm à 875 mm.

Selon une second mode de réalisation de l'invention, formant une alternative au premier mode de réalisation précité ou pouvant être prévu en plus de ce dernier, la disposition constructive peut consister, dans le cas d'un cadre d'attelage 2" en forme de U régulier et symétrique, avec une poutre centrale transversale 10 et deux bras latéraux 10', 10" perpendiculaires (de même longueur) et portant à leurs extrémités libres respectives les tourillons d'attelage inférieurs 5, 5', en une liaison articulée 9 entre la potence 7 et le châssis 2', avec un axe de pivotement AP positionné de manière inclinée par rapport au bras latéral 10" situé du côté du possible déport latéral de l'outil ou du groupe d'outils 6, l'inclinaison de cet axe AP étant orienté en direction du côté opposé et présentant un angle γ = 90° - α déterminé, où l'angle α est avantageusement compris entre 82° et 88°.

L'homme du métier comprend aisément qu'il est possible de mettre en œuvre les deux variantes non interférentes précitées sur une même machine agricole 1, en limitant l'amplitude de l'influence des dispositions constructives de chaque variante, de manière à aboutir à un niveau cumulé de précompensation structurelle intégrée compatible avec le degré de rétablissement d'affaissement et résultant de la combinaison desdites variantes et de leurs contributions respectives.

Conformément à une caractéristique avantageuse de l'invention, la liaison articulée 9 entre la potence 7 et le châssis 2' comprend un fût 11 monté dans un palier 12 solidaire du bras latéral 10" du cadre d'attelage 2" situé du côté du possible déport latéral de l'outil ou du groupe d'outils 6, ledit fût 11 étant monté articulé sur ledit châssis 2'. De plus, la potence 7 est reliée à ce fût 11 par une chape 13 autorisant une inclinaison réglable de la potence 7 par rapport à l'axe de pivotement AP du fût 11, ladite inclinaison étant réglée par l'intermédiaire d'un actionneur de commande 14 reliant ladite potence 7 au châssis 2'.

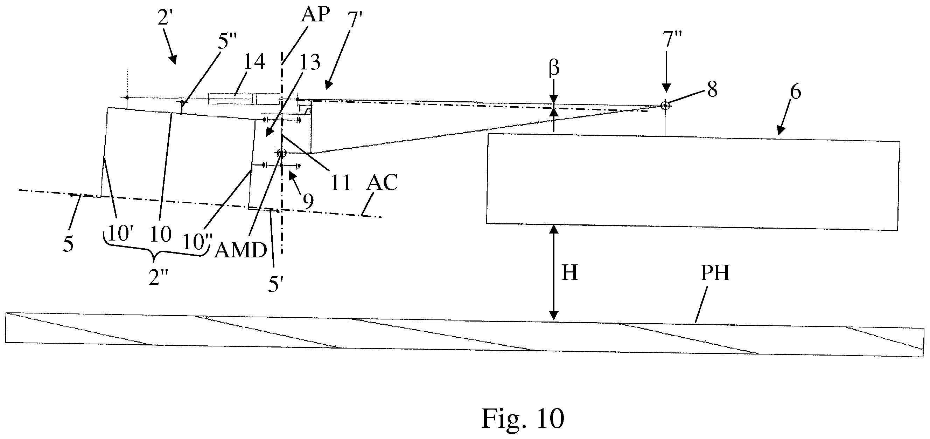

En accord avec un autre mode de réalisation, ressortant de la figure 10, il peut être prévu que, dans le cas d'un cadre d'attelage 2" en forme de U régulier et symétrique, avec une poutre centrale transversale 10 et deux bras latéraux 10', 10" perpendiculaires et portant à leurs extrémités libres respectives les tourillons d'attelage inférieurs 5, 5', présentant une liaison articulée 9 entre la potence 7 et le châssis 2', avec un axe de pivotement AP parallèle au bras latéral 10" du cadre d'attelage 2" situé du côté du possible déport latéral de l'outil ou du groupe d'outils 6. Cette liaison comprend en outre un fût 11 monté dans un palier 12 solidaire du bras latéral 10" du cadre d'attelage 2" situé du côté du possible déport latéral de l'outil ou du groupe d'outils 6, ledit fût 11 étant articulé avec ledit cadre d'attelage 2". Dans cette construction, la potence 7 est, par rapport à un plan perpendiculaire à l'axe de pivotement AP de la liaison articulée, structurellement inclinée vers le haut depuis une chape 13 reliant ladite potence 7 au fût 11 vers l'extrémité libre 7" de ladite potence 7.

Préférentiellement, l'angle β d'inclinaison de la potence 7 par rapport au plan perpendiculaire à l'axe de pivotement AP est compris entre 2° et 8°, préférentiellement de l'ordre de 4° (inclinaison interne à la potence).

Dans ce mode de réalisation également, un actionneur de commande 14 (du type vérin hydraulique - couramment désigné par vérin de passage d'andains) règle l'inclinaison de la potence 7 par rapport à l'axe de pivotement du fût 11.

Comme le montre la figure 14, la machine 1 selon l'invention est avantageusement équipée, du côté du bras 10" et du tourillon inférieur 5', d'une béquille d'appui 16 présentant une forme telle que son pied, et donc la zone de contact avec le sol, est déporté latéralement vers l'extérieur, entraînant une meilleure stabilisation lors de la dépose et un positionnement horizontal ou parallèle au sol de l'axe AC.

De plus, la structure de cette béquille 16 est avantageusement incurvée et subit une déformation élastique limitée sous contrainte lors de la dépose de la machine 1 au sol, au fur et à mesure de l'abaissement du système d'attelage 3 du tracteur 4.

La figure 15 illustre, à titre d'exemple, une possible réalisation pratique des éléments de la double articulation entre la potence 7, d'une part, et le châssis 2' et le cadre d'attelage 2", d'autre part, à savoir, en particulier : le fût 11 et son axe de pivotement AP par rapport au châssis 2' (et au cadre 2"), la potence 7 et son axe d'articulation AMD (relèvement et abaissement de la potence 7), ainsi que les actionneurs 14 et 14' pour les déplacements en pivotement (autour de AP : entre la position déportée latéralement et la position alignée selon la direction d'avance D ou position de transport) et en inclinaison (autour de AMD : entre la position relevée de passage d'andains et la position abaissée de travail au sol). Cette figure montre également une réalisation pratique non limitative d'une partie des composantes de la structure porteuse 2.

La présente invention a préférentiellement également pour objet un attelage agricole motorisé comprenant un tracteur 4 et une machine agricole 1 portée par ce dernier et comportant un outil ou un groupe d'outils 6,
attelage agricole caractérisé en ce que la machine agricole est une machine agricole 1 tel que décrit précédemment.

Préférentiellement, mais non limitativement, et comme cela ressort des figures 8 à 14 annexées, la machine agricole portée 1 consiste en une faucheuse, le groupe d'outils 6 correspondant à un groupe de fauche avec une barre de coupe 15 équipée de plusieurs disques à couteaux 15'.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, tant que l'étendue de protection de l'invention telle que définie dans la revendication indépendante 1 est respectée.

## Revendications

1. Machine agricole portée comprenant, d'une part, une structure porteuse (2) avec un châssis (2') et une potence (7), le châssis (2') comportant un cadre d'attelage (2") pour un montage accouplé sur un système d'attelage (3) à trois points d'un tracteur (4) ou analogue, et, d'autre part, un outil ou groupe d'outils (6) monté sur le châssis (2') par l'intermédiaire de la potence (7) qui est reliée de manière articulée au châssis (2') par une extrémité (7') et qui porte l'outil ou le groupe d'outils (6) à son extrémité opposée (7") libre,
ladite potence (7) pouvant, par un pivotement par rapport au châssis (2'), amener l'outil ou le groupe d'outils (6) dans une position déportée latéralement par rapport à la direction d'avance (D) et l'inclinaison de ladite potence (7) par rapport à un plan horizontal (PH) ou au plan du sol pouvant être commandée, dans la position déportée latéralement, pour déplacer l'outil ou le groupe d'outils (6) entre une position abaissée et une position relevée,
le cadre d'attelage (2") du châssis (2') comportant notamment deux tourillons inférieurs (5, 5') destinés à venir en prise avec les deux bras de relevage inférieurs (3') du système d'attelage (3) du tracteur (4) ou analogue, les deux tourillons (5 et 5') étant mutuellement alignés et leur axe commun (AC) étant situé dans un plan horizontal ou disposé parallèlement au plan du sol, en position de dépose de la machine (1),
ladite machine agricole (1) intégrant dans sa structure, entre ses tourillons d'attelage inférieurs (5, 5') et l'extrémité libre (7") de la potence (7) portant l'outil ou le groupe d'outils (6), une disposition constructive visant, lorsque l'outil ou le groupe d'outils (6) est en position déportée latéralement, à augmenter la distance entre, d'une part, l'axe commun (AC) aux deux tourillons d'attelage inférieurs (5, 5') ou le plan contenant simultanément cet axe (AC) et la direction d'avance (D) et, d'autre part, le point ou l'axe de liaison (8) entre l'extrémité (7") de la potence (7) et l'outil ou le groupe d'outils (6), et
la disposition constructive consistant en une inclinaison de l'axe (AP) de la liaison articulée de pivotement (9) entre la potence (7) et le châssis (2') par rapport à la perpendiculaire au plan contenant, d'une part, l'axe commun (AC) aux deux tourillons d'attelage inférieurs (5, 5') et, d'autre part, un axe sécant et parallèle à la direction d'avance (D) du tracteur (4), ce du côté opposé au côté du possible déport latéral de l'outil ou du groupe d'outils (6)
machine agricole (1) **caractérisée**
**en ce que** la disposition constructive est intégrée dans la structure de ladite machine (1) lors de sa fabrication et ne met en œuvre aucun mécanisme de réglage et soit en ce que la disposition constructive consiste en une construction asymétrique du châssis (2'), le tourillon d'attelage inférieur (5') situé du côté du possible déport latéral de l'outil ou du groupe d'outils (6) étant disposé plus bas que l'autre tourillon d'attelage inférieur (5), et,
**en ce que** la disposition constructive consiste, dans le cas d'un cadre d'attelage (2") en forme de U avec une poutre centrale transversale (10) portant un tourillon d'attelage supérieur (5") et deux bras latéraux (10', 10") portant à leurs extrémités libres respectives les tourillons d'attelage inférieurs (5 et 5'), en un bras latéral (10"), situé du côté du possible déport latéral de l'outil ou du groupe d'outils (6), qui présente une longueur (L) plus grande que l'autre bras latéral (10'), lesdits bras latéraux (10', 10") étant préférentiellement arrangés de manière non perpendiculaire, à savoir légèrement inclinés, par rapport à ladite poutre centrale transversale (10), soit en ce que la disposition constructive consiste, dans le cas d'un cadre d'attelage (2") en forme de U régulier et symétrique, avec une poutre centrale transversale (10) et deux bras latéraux (10', 10") perpendiculaires et portant à leurs extrémités libres respectives les tourillons d'attelage inférieurs (5, 5'), en une liaison articulée (9) entre la potence (7) et le châssis (2'), avec un axe de pivotement (AP) positionné de manière inclinée par rapport au bras latéral (10") situé du côté du possible déport latéral de l'outil ou du groupe d'outils (6), l'inclinaison de cet axe (AP) étant orienté en direction du côté opposé et présentant un angle γ = (90° - α) déterminé.

2. Machine agricole selon la revendication 1, **caractérisée en ce que** la liaison articulée (9) entre la potence (7) et le châssis (2') comprend un fût (11) monté dans un palier (12) solidaire du bras latéral (10") du cadre d'attelage (2") situé du côté du possible déport latéral de l'outil ou du groupe d'outils (6), ledit fût (11) étant monté articulé sur le châssis (2') et **en ce que** la potence (7) est reliée à ce fût (11) par une chape (13) autorisant une inclinaison réglable de la potence (7) par rapport à l'axe de pivotement (AP) du fût (11), ladite inclinaison étant réglée par l'intermédiaire d'un actionneur de commande (14) reliant ladite potence (7) au châssis (2').

3. Machine agricole selon la revendication 1, **caractérisée en ce que** la différence de longueurs entre les deux bras latéraux (10, 10') est comprise entre 30 mm et 100 mm, préférentiellement de l'ordre de 70 mm.

4. Machine agricole selon l'une quelconque des revendications 1 à 3, **caractérisée en ce qu'**elle consiste en une faucheuse, le groupe d'outils (6) correspondant à un groupe de fauche avec une barre de coupe (15) équipée de plusieurs disques à couteaux (15').

5. Attelage agricole motorisé comprenant un tracteur et une machine agricole portée par ce dernier et comportant un outil ou un groupe d'outils,
attelage agricole **caractérisé en ce que** la machine agricole est une machine agricole (1) selon l'une quelconque des revendications 1 à 4.

## Patentansprüche

1. Landwirtschaftliche Anbaumaschine mit einerseits einem Tragwerk (2) mit einem Rahmen (2') und einem Tragarm (7), wobei der Rahmen (2') einen Kupplungsrahmen (2") für eine angekoppelte Montage an einer Dreipunktkupplungsvorrichtung (3) eines Schleppers (4) oder Ähnlichem, und andererseits einem Werkzeug oder einer Werkzeug-kombination (6), die auf dem Rahmen (2') mittels des Tragarms (7) montiert sind, der über ein Ende (7') angelenkt mit dem Rahmen (2') verbunden ist und der das Werkzeug oder die Werkzeugkombination (6) an seinem gegenüberliegenden freien Ende (7") trägt,
wobei der Tragarm (7) durch Schwenken in Bezug auf den Rahmen (2') das Werkzeug oder die Werkzeugkombination (6) in eine Position bringen kann, die in Bezug auf die Vorschubrichtung (D) seitlich versetzt ist, und wobei die Neigung des Tragarms (7) in Bezug auf eine horizontale Ebene (PH) oder auf die Ebene des Bodens, in der seitlich versetzten Position, gesteuert werden kann, um das Werkzeug oder die Werkzeugkombination (6) zwischen einer abgesenkten Position und einer angehobenen Position zu verschieben,
wobei der Kupplungsrahmen (2") des Rahmens (2') insbesondere zwei untere Zapfen (5, 5') umfasst, die dazu bestimmt sind, in die zwei unteren Hubarme (3') der Kupplungsvorrichtung (3) des Schleppers (4) oder Ähnlichem einzugreifen, wobei die zwei Zapfen (5 und 5') zueinander ausgerichtet sind und sich ihre gemeinsame Achse (AC) in einer horizontalen Ebene befindet oder parallel zur Ebene des Bodens angeordnet ist, in der Abstellposition der Maschine (1),
wobei die landwirtschaftliche Maschine (1) in ihrer Struktur, zwischen ihren unteren Kupplungszapfen (5, 5') und dem freien Ende (7") des Tragarms (7), welcher das Werkzeug oder die Werkzeugkombination (6) trägt, eine Konstruktionsanordnung integriert, die darauf abzielt, wenn sich das Werkzeug oder die Werkzeugkombination (6) in der seitlich versetzten Position befindet, die Distanz zwischen einerseits der gemeinsamen Achse (AC) der zwei unteren Kupplungszapfen (5, 5') oder der Ebene, die gleichzeitig diese Achse (AC) und die Vorschubrichtung (D) enthält, und andererseits dem Punkt oder der Verbindungsachse (8) zwischen dem Ende (7") des Tragarms (7) und dem Werkzeug oder der Werkzeugkombination (6) zu erhöhen,
wobei die Konstruktionsanordnung aus einer Neigung der Achse (AP) der Gelenkverbindung (9) zum Schwenken zwischen dem Tragarm (7) und dem Rahmen (2') in Bezug auf die Senkrechte zur Ebene besteht, welche einerseits die gemeinsame Achse (AC) der zwei unteren Kupplungszapfen (5, 5') und andererseits eine Schnittachse enthält, die parallel zur Vorschubrichtung (D) des Schleppers (4) verläuft, dies auf jener Seite, die der Seite des möglichen seitlichen Versatzes des Werkzeugs oder der Werkzeugkombination (6) gegenüberliegt,
wobei die landwirtschaftliche Maschine (1) dadurch gekenn-zeichnet ist,
dass die Konstruktionsanordnung in die Struktur der Maschine (1) bei ihrer Fertigung integriert wird und keinerlei Einstellmechanismus verwendet und
entweder, dass die Konstruktionsanordnung aus einer asymmetrischen Konstruktion des Rahmens (2') besteht, wobei der untere Kupplungszapfen (5'), der sich auf Seite des möglichen seitlichen Versatzes des Werkzeugs oder der Werkzeugkombination (6) befindet, tiefer als der andere untere Kupplungszapfen (5) angeordnet ist, und
dass die Konstruktionsanordnung im Fall eines Kupplungs-rahmens (2") in U-Form mit einem zentralen Querbalken (10), der einen oberen Kupplungszapfen (5") und zwei Seitenarme (10', 10") trägt, die an ihren jeweiligen freien Enden die unteren Kupplungszapfen (5 und 5') tragen, aus einem Seitenarm (10"), der sich auf Seite des möglichen seitlichen Versatzes des Werkzeugs oder der Werkzeugkombination (6) befindet, der eine größere Länge (L) als der andere Seitenarm (10') aufweist besteht, wobei die Seitenarme (10', 10") vorzugsweise nicht senkrecht, nämlich leicht geneigt, in Bezug auf den zentralen Querbalken (10) angeordnet sind,
oder dass die Konstruktionsanordnung, im Fall eines Kupplungsrahmens (2") in regelmäßiger und symmetrischer U-Form, mit einem zentralen Querbalken (10) und zwei senkrechten Seitenarmen (10', 10"), die an ihren jeweiligen freien Enden die unteren Kupplungszapfen (5, 5') tragen, aus einer Gelenkverbindung (9) zwischen dem Tragarm (7) und dem Rahmen (2') besteht, mit einer Schwenkachse (AP), die in Bezug auf den Seitenarm (10"), der sich auf Seite des möglichen seitlichen Versatzes des Werkzeugs oder der Werkzeugkombination (6) befindet, geneigt positioniert ist, wobei die Neigung dieser Achse (AP) in Richtung der gegenüberliegenden Seite ausgerichtet ist und einen bestimmten Winkel γ = (90° - α) aufweist.

2. Landwirtschaftliche Maschine nach Anspruch 1, **dadurch gekennzeichnet, dass** die Gelenkverbindung (9) zwischen dem Tragarm (7) und dem Rahmen (2') einen Zylinder (11) umfasst, der in einem Lager (12) montiert ist, das fest mit dem Seitenarm (10") des Kupplungsrahmens (2") verbunden ist, der sich auf Seite des möglichen seitlichen Versatzes des Werkzeugs oder der Werkzeugkombination (6) befindet, wobei der Zylinder (11) auf dem Rahmen (2') gelenkig montiert ist, und dadurch, dass der Tragarm (7) mit diesem Zylinder (11) durch einen Bügel (13) verbunden ist, der eine einstellbare Neigung des Tragarms (7) in Bezug auf die Schwenkachse (AP) des Zylinders (11) zulässt, wobei die Neigung mittels eines Betätigungsstellers (14) eingestellt wird, der den Tragarm (7) mit dem Rahmen (2') verbindet.

3. Landwirtschaftliche Maschine nach Anspruch 1, **dadurch gekennzeichnet, dass** die Längendifferenz zwischen den zwei Seitenarmen (10, 10') zwischen 30 mm und 100 mm beträgt, vorzugsweise etwa 70 mm.

4. Landwirtschaftliche Maschine nach irgendeinem der Ansprüche 1 bis 3, **dadurch gekennzeichnet, dass** sie aus einer Mähmaschine besteht, wobei die Werkzeugkombination (6) einem Mähwerk mit einem Mähbalken (15) entspricht, der mit mehreren mit Messern versehenen Scheiben (15') ausgestattet ist.

5. Motorisierte landwirtschaftliche Kombination mit einem Schlepper und einer landwirtschaftlichen Anbaumaschine an Letzterem, die ein Werkzeug oder eine Werkzeugkombination umfasst,
wobei die landwirtschaftliche Kupplung dadurch gekenn-zeichnet ist, dass die landwirtschaftliche Maschine eine landwirtschaftliche Maschine (1) nach irgendeinem der Ansprüche 1 bis 4 ist.

## Claims

1. Mounted agricultural machine comprising, on one hand, a carrier structure (2) with a chassis (2') and a support arm (7), the chassis (2') comprising a coupling frame (2") for coupled mounting onto a three-point hitching device (3) of a tractor vehicle (4) or similar, and, on the other hand, a tool or group of tools (6) mounted on the chassis (2') by means of the support arm (7), which is connected in articulated manner to the chassis (2') at one end (7'), and which carries the tool or group of tools (6) at its free opposite end (7"),
said support arm (7) being able, by pivoting relative to the chassis (2'), to bring the tool or group of tools (6) into a position offset laterally with regard to the direction of advance (D), and the inclination of the said support (7) arm relative to a horizontal plane (PH) or to the ground plane being able to be controlled, in the laterally offset position, to move the tool or group of tools (6) between a lowered position and a raised position,
the coupling frame (2") of the chassis (2') comprising in particular two lower pins (5, 5'), intended to engage with the two lower lift arms (3') of the hitching device (3) of the tractor (4) or similar, the two pins (5 and 5') being mutually aligned and their common axis (AC) being located in a horizontal plane or arranged parallel to the ground plane, in the in the position of setting down the machine (1),
the said agricultural machine (1) incorporating in its structure, between its lower hitch pins (5, 5') and the free end (7") of the support arm (7) carrying the tool or group of tools (6), a construction arrangement aimed at, when the tool or group of tools (6) is in the laterally offset position, increasing the distance between, on the one hand, the axis (AC) common to the two lower hitch pins (5, 5') or the plane simultaneously containing this axis (AC) and the direction of advance (D) and, on the other hand, the point or the connecting axis (8) between the end (7") of the support arm (7) and the tool or group of tools (6), and
the construction arrangement consisting of an inclination of the pin (AP) of the articulated pivot connection (9) between the support arm (7) and the chassis (2') with respect to the perpendicular to the plane containing, on the one hand, the axis (AC) common to the two lower hitch pins (5, 5') and, on the other hand, a secant axis parallel to the direction of advance (D) of the tractor (4), this being on the side which is opposite to the side of the possible side shift of the tool or of group of tools (6)
agricultural machine (1) **characterised**
**in that** the construction arrangement is incorporated into the structure of the said machine (1) while it is being manufactured and implements no adjustment mechanism and
either in that the construction arrangement consists of an asymmetrical construction of the chassis (2'), the lower hitch pin (5) located on the side of the possible side shift of the tool or group of tools (6) being placed lower than the other lower hitch pin (5), and
**in that** the construction arrangement consists, in the case of a U-shaped coupling frame (2") with a central cross-beam (10) carrying an upper hitch pin (5") and two side arms (10', 10") carrying at their respective free ends the lower hitch pins (5 and 5'), of a side arm (10") located on the side of the possible side shift of the tool or group of tools (6) having a length (L) that is greater than the other side arm (10'), the said side arms (10', 10") being preferably arranged in a non-perpendicular manner, i.e. slightly tilted, with regard to the said central cross-beam (10);
either in that the construction arrangement consists, in the case of a coupling frame (2") in a regular and symmetrical U shape, with a central cross-beam (10) and two side arms (10', 10") perpendicular and carrying at their respective free ends the lower hitch pins (5, 5'), of an articulated connection (9) between the support arm (7) and the chassis (2'), with a swivel pin (AP) positioned tilted relative to the side arm (10") located on the side of the possible side shift of the tool or group of tools (6), the tilt of this pin (AP) being oriented in the direction of the opposite side and having a determined angle γ = (90° - α).

2. Agricultural machine according to claim 1, **characterised in that** the articulated connection (9) between the support arm (7) and the chassis (2') comprises a drum (11) mounted in a bearing (12) rigidly fastened to the side arm (10") of the coupling frame (2") located on the side of the possible side shift of the tool or group of tools (6), the said drum (11) being mounted in articulated manner on the chassis (2'); and **in that** the support arm (7) is connected to this drum (11) by a stirrup (13) allowing an adjustable inclination of the support arm (7) with regard to the swivel pin (AP) of the drum (11), the said inclination being adjusted by means of a control actuator (14) connecting the said support arm (7) to the chassis (2').

3. Agricultural machine according to claim 1, **characterised in that** the difference in the lengths of the two side arms (10', 10') is between 30 mm and 100 mm, preferably of the order of 70 mm.

4. Agricultural machine according to any one of claims 1 to 3, **characterised in that** it consists of a mower, the group of tools (6) being a mower unit with a cutter bar (15) fitted with several discs with blades (15').

5. Motorised agricultural combination comprising a tractor and a mounted agricultural machine carried by the tractor and comprising a tool or group of tools,
agricultural combination **characterised in that** the agricultural machine is an agricultural machine (1) according to any one of claims 1 to 4.
